(19) Europäisches Patentamt / European Patent Office / Office européen des brevets

(11) **EP 4 135 070 A1**

(12) **EUROPEAN PATENT APPLICATION**
published in accordance with Art. 153(4) EPC

(43) Date of publication:
**15.02.2023 Bulletin 2023/07**

(21) Application number: **21784516.3**

(22) Date of filing: **26.02.2021**

(51) International Patent Classification (IPC):
**H01M 4/36** [(1974.07)]       **H01M 4/587** [(2010.01)]
**C01B 32/05** [(2017.01)]

(52) Cooperative Patent Classification (CPC):
**C01B 32/05; H01M 4/36; H01M 4/587;** Y02E 60/10

(86) International application number:
**PCT/JP2021/007380**

(87) International publication number:
**WO 2021/205774 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2020 JP 2020071206**

(71) Applicant: **Kureha Corporation**
**Chuo-ku**
**Tokyo 103-8552 (JP)**

(72) Inventor: **SONOBE Naohiro**
**Tokyo 103-8552 (JP)**

(74) Representative: **Hoefer & Partner Patentanwälte mbB**
**Pilgersheimer Straße 20**
**81543 München (DE)**

(54) **METHOD FOR PRODUCING CARBONACEOUS MATERIAL FOR NEGATIVE ELECTRODE OF NON-AQUEOUS ELECTROLYTE SECONDARY BATTERY, METHOD FOR PRODUCING ELECTRODE OF NON-AQUEOUS ELECTROLYTE SECONDARY BATTERY, AND METHOD FOR PRODUCING NON-AQUEOUS ELECTROLYTE SECONDARY BATTERY**

(57)     Provided is a method of producing a carbonaceous material having a large de-doping capacity despite the reduced amount of sodium added to a carbon precursor.

The method of producing a carbonaceous material for a negative electrode of a non-aqueous electrolyte secondary battery includes (1) an addition condensation step of subjecting a raw material mixture composed of phenols containing 50 mass% or greater of phenol and an aldehyde to addition condensation in the presence of a sodium-based basic catalyst at less than 5 mass% relative to the raw material mixture to produce a resol type phenol resin; (2) a heat treating step of subjecting the resol type phenol resin to a main heat treatment at a temperature of from 950°C to 1500°C in a non-oxidizing gas atmosphere to produce a heat-treated carbon; and (3) a coating step of coating the heat-treated carbon with pyrolytic carbon to produce a carbonaceous material.

EP 4 135 070 A1

**Description**

**[TECHNICAL FIELD]**

The present invention relates to a method of producing a carbonaceous material for a negative electrode of a non-aqueous electrolyte secondary battery, a method of producing an electrode of a non-aqueous electrolyte secondary battery, and a method of producing a non-aqueous electrolyte secondary battery; more specifically, the present invention relates to a method of producing an electrode of a non-aqueous electrolyte secondary battery and a method of producing a non-aqueous electrolyte secondary battery capable of producing a carbonaceous material having a large de-doping capacity without the addition of a sodium compound to a carbon precursor by using a phenol resin addition-condensed using a sodium-based basic catalyst as the carbon precursor.

**[BACKGROUND ART]**

Small portable devices such as mobile telephones or notebook personal computers are being made highly sophisticated, and thus secondary batteries used as power supplies thereof are expected to have a high energy density. A non-aqueous electrolyte lithium secondary battery using a carbonaceous material as a negative electrode has been proposed as a secondary battery having a high energy density (Patent Document 1).

In recent years, there has been a growing concern on environmental issues, and electric vehicles (xEVs), such as an electric vehicle, which is expected to reduce environmental burden are becoming widespread. As an energy source for xEVs, non-aqueous electrolyte lithium secondary batteries are widely used as secondary batteries having a high energy density, and are expected to have a higher energy density to extend the range per charge in EV applications.

All-solid-state batteries are attracting attention as innovative storage batteries aiming at even higher energy densities. An all-solid-state battery is a highly safe battery in which flammable organic electrolyte solution is replaced with nonflammable inorganic solid electrolyte. In an all-solid-state battery, a solid electrolyte is used also in the electrode layers as a conduction pathway for lithium ions; accordingly, a high conductivity including contact resistance between particles is required. As such, it is necessary not only to improve the conductivity of solid electrolyte but also to form a good interface between solid electrolyte and electrode active material. Accordingly, electrode active materials are not only required to have a large de-doping capacity but also shape stability (reduction of expansion and shrinkage) during doping and de-doping when an all-solid-state battery is being used.

As an example for increasing the de-doping capacity of lithium as a negative electrode material, Patent Document 2 proposes a method of producing a carbonaceous material used for a negative electrode of a non-aqueous electrolyte secondary battery. In this method, a carbon precursor is impregnated with a compound containing an elemental alkali metal, and then subjected to a main heat treatment, or then subjected to a pre-heat treatment and further a main heat treatment; the resulting heat-treated carbon is then coated with pyrolytic carbon. It is disclosed that the carbonaceous material produced in this manner is a non-graphitizable carbon that has a small expansion and shrinkage during doping and de-doping of lithium and that exhibits a large de-doping capacity as a negative electrode material for a non-aqueous electrolyte secondary battery.

**[CITATION LIST]**

**[PATENT DOCUMENT]**

Patent Document 1: JP S57-208079 A
Patent Document 2: WO 2016/021737

**[SUMMARY OF INVENTION]**

**[TECHNICAL PROBLEM]**

The main heat treatment in Patent Document 2 is a heat treatment of a carbon precursor impregnated with an alkali metal compound at a temperature of from 800 to 1500°C in a non-oxidizing gas atmosphere. At this time, the compound containing the elemental alkali metal with which the carbon precursor is impregnated is reduced into alkali metal and evaporates. The alkali metal that has evaporated in this manner precipitates in a low temperature part below the boiling point (e.g., metal sodium, which is an alkali metal, has a boiling point of 883°C and is liquid at a temperature below this temperature), or reacts with hydrogen gas generated in a carbonization reaction of the carbon precursor to form a hydrogenated alkali metal compound and precipitates in a low temperature part (e.g., sodium hydride decomposes at approximately 800°C or higher and is solid at a temperature below this temperature).

In the case of mass production using a production method as the one in Patent Document 2, it is necessary to use a continuous furnace and discharge the generated alkali metal vapor to the outside of the furnace through a pipe or the like installed in the furnace. As such, the alkali metal vapor precipitates in the pipe, blocking the pipe and making the operation difficult to continue.

Incidentally, doping capacity of negative electrode is the capacity at which lithium can be doped, and de-doping capacity is the capacity at which lithium doped in the negative electrode returns to the positive electrode. The amount of lithium that can be repeatedly used corresponds to the de-doping capacity. Therefore, the difference between the doping capacity and the de-doping capacity corresponds to the lithium capacity for wasted lithium in the positive electrode. As such, the smaller the difference between the doping capacity and the de-doping capacity, the more preferable, and it is not always a preferable property that only the doping capacity is large. In the basic characteristics of battery electrodes, a large de-doping capacity is necessary.

The present invention was conceived in light of the circumstances described above, and an object of the present invention is to provide a method of producing a carbonaceous material for a negative electrode of a non-aqueous electrolyte secondary battery having a large de-doping capacity without the addition of an alkali metal compound to a carbon precursor.

**[SOLUTION TO PROBLEM]**

The present inventors have made extensive studies to solve the problems described above. As a result, the present inventors found that when a carbonaceous material is produced by subjecting a raw material mixture composed of phenols containing 50 mass% or greater of phenol and an aldehyde to addition condensation in the presence of a sodium-based basic catalyst at less than 5 mass% relative to the raw material mixture to produce a resol type phenol resin, using the resulting resol type phenol resin as a carbon source to perform a main heat treatment, or a pre-heat treatment and then a main heat treatment, to produce a heat-treated carbon, and coating the resulting heat-treated carbon with pyrolytic carbon, the carbonaceous material has excellent doping/de-doping capacity, thereby completing the present invention. Specifically, the present invention includes the following embodiments.

[1] A method of producing a carbonaceous material for a negative electrode of a non-aqueous electrolyte secondary battery, the method including:

(1) an addition condensation step of subjecting a raw material mixture composed of phenols containing 50 mass% or greater of phenol and an aldehyde to addition condensation in the presence of a sodium-based basic catalyst at less than 5 mass% relative to the raw material mixture to produce a resol type phenol resin;
(2) a heat treating step of subjecting the resol type phenol resin to:

(a) a main heat treatment at a temperature of from 950°C to 1500°C in a non-oxidizing gas atmosphere to produce a heat-treated carbon, or
(b) a pre-heat treatment at a temperature of from 300°C or higher to lower than 800°C and then a main heat treatment at a temperature of from 950°C to 1500°C in a non-oxidizing gas atmosphere to produce a heat-treated carbon; and

(3) a coating step of coating the heat-treated carbon with pyrolytic carbon to produce a carbonaceous material.

[2] The method of producing a carbonaceous material for a negative electrode of a non-aqueous electrolyte secondary battery according to [1], wherein, in the (a) or the (b) of the heat treating step, a main heat treatment is performed at a temperature of from 1050°C to 1500°C.

[3] The method of producing a carbonaceous material for a negative electrode of a non-aqueous electrolyte secondary battery according to [1] or [2], wherein the coating step is a step of coating the heat-treated carbon with pyrolytic carbon generated by gas-phase thermolysis of an aliphatic hydrocarbon at a temperature of from 600°C to 1500°C.

[4] The method of producing a carbonaceous material for a negative electrode of a non-aqueous electrolyte secondary battery according to any one of [1] to [3], further including a step of washing the heat-treated carbon to remove sodium after the heat treating step and prior to the coating step.

[5] The method of producing a carbonaceous material for a negative electrode of a non-aqueous electrolyte secondary battery according to any one of [1] to [4], wherein the carbonaceous material has a true density measured by a pycnometer method with butanol of from 1.20 g/cm$^3$ to 1.60 g/cm$^3$, a specific surface area determined by a BET method using nitrogen adsorption of 30 m$^2$/g or less, an average particle size of 50 μm or less, and an atom ratio of hydrogen atoms to carbon atoms (H/C) determined by elemental analysis of 0.1 or less.

[6] A method of producing an electrode of a non-aqueous electrolyte secondary battery, the method including: producing a carbonaceous material for a negative electrode of a non-aqueous electrolyte secondary battery by the method of producing a carbonaceous material for a negative electrode of a non-aqueous electrolyte secondary battery according to any one of [1] to [5], and producing an electrode of a non-aqueous electrolyte secondary battery using the carbonaceous material for a negative electrode of a non-aqueous electrolyte secondary battery.

[7] A method of producing a non-aqueous electrolyte secondary battery, the method including: producing an electrode of a non-aqueous electrolyte secondary battery by the method of producing an electrode of a non-aqueous electrolyte secondary battery according to [6], and producing a non-aqueous electrolyte secondary battery using the electrode of a non-aqueous electrolyte secondary battery.

[ADVANTAGEOUS EFFECTS OF INVENTION]

The present invention provides a method of producing a carbonaceous material for a negative electrode of a non-aqueous electrolyte secondary battery that can produce a carbonaceous material having a large de-doping capacity without the addition of an alkali metal compound to a carbon precursor.

[DESCRIPTION OF EMBODIMENTS]

Hereinafter, embodiments of the present invention will be described in detail. The present invention is not limited to the following embodiments and may be implemented with appropriate modifications within the scope of the objective of the present invention. Note that, in the present specification, the designation "X to Y" (X and Y each are an numerical value) means "X or greater and Y or less".

[1] Method of producing a carbonaceous material for a non-aqueous electrolyte secondary battery anode

The method of producing a carbonaceous material for a negative electrode of a non-aqueous electrolyte secondary battery according to an embodiment of the present invention includes: (1) an addition condensation step of subjecting a raw material mixture composed of phenols containing 50 mass% or greater of phenol and an aldehyde to addition condensation in the presence of a sodium-based basic catalyst at less than 5 mass% relative to the raw material mixture to produce a resol type phenol resin; (2) a heat treating step of subjecting the resol type phenol resin to (a) a main heat treatment at a temperature of from 950°C to 1500°C in a non-oxidizing gas atmosphere to produce a heat-treated carbon, or (b) a pre-heat treatment at a temperature of from 300°C or higher to lower than 800°C and then a main heat treatment at a temperature of from 950°C to 1500°C in a non-oxidizing gas atmosphere to produce a heat-treated carbon, and (3) a coating step of coating the heat-treated carbon with pyrolytic carbon to produce a carbonaceous material.

Note that, in the present specification, the term "carbon precursor" means an organic material before the performance of a main heat treatment. That is, the "carbon precursor" in the production method according to an embodiment of the present invention is a resol type phenol resin. Furthermore, in the present specification, the carbon precursor that has undergone a pre-heat treatment may be referred to as "pre-heat-treated carbon". Furthermore, a carbonaceous heat treated product after undergoing a main heat treatment and before being coated with pyrolytic carbon may be referred to as "heat-treated carbon".

Also, "phenols containing 50 mass% or greater of phenol" refers to a phenol in which the content of phenol with respect to the total amount of the phenols is 50 mass% or greater.

In the present invention, the resol type phenol resin produced by addition condensation in the presence of a sodium-based basic catalyst at less than 5 mass% relative to the raw material mixture, which is described above, is used as a carbon source for the carbonaceous material for a negative electrode of a non-aqueous electrolyte secondary battery. The resol type phenol resin is synthesized in a liquid phase, and the sodium in the catalyst is substantially uniformly distributed inside the resol type phenol resin.

When the resol type phenol resin is subjected to a heat treatment in a non-oxidizing gas atmosphere, carbonization proceeds. At this time, the sodium contained in the resol type phenol resin is alkali-activated to form cavities in the carbonaceous material. The cavities formed in this manner are suitable for storing lithium. Moreover, inside the resol type phenol resin used here, sodium is substantially uniformly distributed; accordingly, a carbonaceous material produced from such a raw material has substantially uniform cavities as a whole. As a result, such a carbonaceous material exhibits excellent doping/de-doping capacity.

In particular, compared to an organic material (see Patent Document 2) in which a carbon precursor derived from another carbon source is impregnated with sodium or potassium, the resol type phenol resin according to an embodiment of the present invention has an uniform distribution of sodium; as such, compared to a carbonaceous material made from a raw material which is an organic material in which a conventional carbon precursor is impregnated with sodium, the carbonaceous material resulting from the resol type phenol resin according to an embodiment of the present invention has cavities inside that are formed more uniformly. Therefore, in a method of producing a carbonaceous material for a negative electrode of a secondary battery, the amount of sodium required to achieve an excellent doping/de-doping capacity may be suppressed.

(1) Addition condensation step

The addition condensation step is a step in which a raw material mixture composed of phenols containing 50 mass% or greater of phenol and an aldehyde is subjected to addition condensation in the presence of a sodium-based basic catalyst at less than 5 mass% relative to the raw material mixture to produce a resol type phenol resin.

Resol type phenol resin

A resol type phenol resin refers to a product synthesized by subjecting phenols and an aldehyde to an addition condensation reaction in the presence of a basic catalyst.

In the present invention, the resol type phenol resin produced by addition condensation in the presence of a sodium-based basic catalyst at less than 5 mass% relative to a raw material mixture composed of phenols and an aldehyde is used as a carbon source for the carbonaceous material for a negative electrode of a non-aqueous electrolyte secondary battery.

The amount of the sodium-based basic catalyst used in the addition condensation is not limited as long as the amount is less than 5 mass%. The amount of the sodium-based basic catalyst used in the addition condensation is preferably less than 4 mass%, more preferably 3.5 mass% or less, even more preferably less than 3 mass%, and particularly preferably less than 2 mass%. Meanwhile, the amount of the sodium-based basic catalyst used is preferably 0.05 mass% or greater, more preferably 0.1 mass% or greater, even more preferably 0.5 mass% or greater, particularly preferably 0.7 mass% or greater, and most preferably 1 mass% or greater.

Here, phenols are a class of compounds having a phenolic hydroxyl group on a benzene ring, and the term specifically refers to phenol and a phenol derivative in which the hydrogen on the benzene ring of phenol is substituted with another substituent. Examples of the phenol derivative include orthocresol, paracresol, para-phenyl phenol, para-nonyl phenol, 2,3-xylenol, 2,5-xylenol, phenol, metacresol, 3,5-xylenol, resorcinol, bisphenol A, bisphenol F, bisphenol B, bisphenol E, bisphenol H, bisphenol S, catechol, and hydroquinone. As described above, the amount of phenol is not limited as long as the amount of phenol is 50 mass% or greater, preferably 70 mass% or greater, more preferably 90 mass% or greater, with respect to the total amount of the phenol.

Furthermore, the aldehyde is a class of compounds represented by the general formula R-CHO in which a carbonyl carbon is bonded to one hydrogen and one functional group (R). Specific examples of the aldehyde include formaldehyde, acetaldehyde, propionaldehyde, butanal, and 1,3,5-trioxane, and multimers of the aldehyde such as paraldehyde. Formaldehyde, acetaldehyde, and a multimer of formaldehyde or acetaldehyde are preferred. In one embodiment, the total amount of formaldehyde and acetaldehyde is preferably 50 mass% or greater, more preferably 70 mass% or greater, and even more preferably 90 mass% or greater, with respect to the total amount of the aldehyde. In addition, in one embodiment, the amount of formaldehyde is preferably 50 mass% or greater, more preferably 70 mass% or greater, and even more preferably 90 mass% or greater, with respect to the total amount of the aldehyde.

The ratio of the amount of the aldehyde to the amount of the phenols is preferably from 0.2 to 3.0 mol of the aldehyde to 1 mol of the phenols. When the amount of the aldehyde is too small, the cross-linking structure may be insufficient and the formation of resin may be difficult, which is not preferable. Meanwhile, when the amount of the aldehyde is too large, the de-doping capacity may decrease, which is not preferable. The amount of the aldehyde to 1 mol of the phenols is preferably 0.2 mol or greater, more preferably 0.3 mol or greater, and particularly preferably 0.4 mol or greater. Furthermore, the amount of the aldehyde to 1 mol of the phenols is preferably 3.0 mol or less, more preferably 2.0 mol or less, and particularly preferably 1.5 mol or less. Note that when a multimer of the aldehyde is used, for 1 mol of the multimer, the product of the mol number of the multimer and the condensation number of the aldehyde is counted as the mol number of the multimer. For example, when 1 mol of 1,3,5-trioxane is used as the aldehyde, since 1,3,5-trioxane is a trimer of formaldehyde, the mol number of the multimer is counted as 3 mol.

As described above, in the addition condensation reaction of the phenols and the aldehyde, a sodium-based basic catalyst is used as a catalyst. Specifically, sodium hydroxide, sodium carbonate, and the like may be used as the catalyst. The use of sodium hydroxide is preferred.

When an addition condensation reaction is carried out with a basic catalyst in this manner, a resol type initial condensate is produced. The produced initial condensate is heated as it is (that is, with the catalyst included) to dehydrate and cure, which produces a resol type phenol resin. Alternatively, an acid is added to the solution that has undergone the addition condensation reaction to neutralize the solution, the initial condensate and the solution are separated, and then the initial condensate is heated to dehydrate and cure, which produces a resol type phenol resin.

Note that in the method of producing a carbonaceous material for a negative electrode of a non-aqueous electrolyte secondary battery according to an embodiment of the present invention, the resol type phenol resin produced through the addition condensation step contains sodium which is distributed in a substantially uniform manner inside the resol type phenol resin; as such, it is not necessary to perform an alkali impregnation treatment of a carbon precursor as in Patent Document 2 described above. The production method according to an embodiment of the present invention can produce a carbonaceous material exhibiting excellent doping/de-doping capacity even without the performance of an alkali impregnation treatment.

The phenol resin may be pulverized as needed. This can reduce unevenness in heat treatment for the pre-heat treatment or the main heat treatment. Pulverization may be performed prior to the pre-heat treatment, fine pulverization may be performed prior to the main heat treatment, or fine pulverization may be performed after the surface treatment. The miller used for pulverization is not limited, and for example, a jet mill, a rod mill, a vibratory ball mill, or a hammer mill may be used.

The average particle size of the phenol resin after pulverization is not limited. The average particle size of the phenol resin after pulverization is preferably 5 mm or less, more preferably 1 mm or less, and particularly preferably 0.5 mm or less. When the average particle size is too large, the removal of the volatile content becomes uneven, which is not preferable. The average particle size of the phenol resin is determined in accordance with a method described in JIS K1474:2014. Specifically, a cumulative particle size curve is created; from the intersection of the vertical line of the 50% point on the horizontal axis (percentage of mass passed through the sieve) and the cumulative particle size curve, a horizontal line is drawn; based on the intersection between the horizontal line and the vertical axis, the value of the sieve opening is calculated and taken as the average particle size.

(2) Heat treating step

The heat treating step according to the present embodiment is a step of subjecting the resol type phenol resin to (a) a main heat treatment at a temperature of from 950°C to 1500°C in a non-oxidizing gas atmosphere to produce a heat-treated carbon, or (b) a pre-heat treatment at a temperature of from 300°C or higher to lower than 800°C and then a main heat treatment at a temperature of from 950°C to 1500°C in a non-oxidizing gas atmosphere to produce a heat-treated carbon.

Pre-heat treatment

The production method according to an embodiment of the present invention may include a pre-heat treatment at a temperature of from 300°C or higher to lower than 800°C in a non-oxidizing gas atmosphere. The pre-heat treatment is an operation for removing volatile contents that are decomposition products of the phenol resin, such as $CO_2$, CO, $CH_4$, and $H_2$, and for removing a tar content. When the phenol resin is directly heat-treated at high temperatures, a large amount of decomposition products is generated from the phenol resin. These decomposition products undergo a secondary decomposition reaction at high temperatures and adhere to the surface of carbon precursor, which may be the cause of a decrease in the performance of a non-aqueous electrolyte secondary battery that uses a carbonaceous material produced from the carbon precursor in an electrode. Furthermore, the decomposition products above may adhere to the inside of a furnace and cause blockage inside the furnace. Therefore, it is preferable to perform the pre-heat treatment before the main heat treatment described below to reduce decomposition products during the main heat treatment.

When the pre-heat treatment temperature is too low, the removal of decomposition products may be insufficient. Meanwhile, when the pre-heat treatment temperature is too high, the decomposition products may undergo reactions such as a secondary decomposition reaction. Therefore, the pre-heat treatment temperature is preferably 300°C or higher and lower than 800°C, more preferably 350°C or higher and lower than 800°C, even more preferably from 400°C to 700°C, and particularly preferably from 550°C to 700°C. When the pre-heat treatment temperature is lower than 300°C, detarring becomes insufficient, the amount of tar or gas generated in the main heat treatment step after pulverization increases; as such, the tar or gas may adhere to particle surfaces, which may cause a decrease in battery performance. Meanwhile, when the pre-heat treatment temperature is 800°C or higher, the generated tar causes a secondary decomposition reaction, and the decomposition products adhere to the carbon precursor; this may cause a decrease in the performance of a non-aqueous electrolyte secondary battery that uses a carbonaceous material produced from the carbon precursor in an electrode.

The pre-heat treatment may be performed in a non-oxidizing gas atmosphere. The non-oxidizing gas is not limited, provided that the non-oxidizing gas does not cause an oxidation reaction at the pre-heat treatment temperature. Preferable examples include noble gases such as helium and argon, or nitrogen; these may be used alone or in a combination. The pre-heat treatment time is not limited, and is preferably 30 minutes or more, more preferably 45 minutes or more, and particularly preferably 1 hour or more. Even if the pre-heat treatment time is too long, there is no adverse effect, but considering the efficiency of thermal energy and non-oxidizing gas, the pre-heat treatment time is preferably 20 hours or less. Here, in a case in which the pre-heat treatment is performed in a continuous furnace, the pre-heat treatment time is a residence time at a temperature of 300°C or higher and lower than 800°C; meanwhile, in a case in which the pre-heat treatment is performed in a batch furnace, the pre-heat treatment time refers to a retention time at a temperature of 300°C or higher and lower than 800°C.

The pre-heat-treated carbon produced by subjecting the carbon precursor to the pre-heat treatment may be pulverized prior to the main heat treatment to achieve a suitable particle size for producing the carbonaceous material according to an embodiment of the present invention. An average particle size of the pre-heat-treated carbon after pulverization is not limited. The average particle size of the pre-heat-treated carbon after pulverization is preferably less than 50 μm, more preferably less than 30 μm, and particularly preferably less than 20 μm. Furthermore, the average particle size of the pre-heat-treated carbon after pulverization is preferably 1 μm or greater.

Main heat treatment

In the production method according to an embodiment of the present invention, the main heat treatment is a step of heating at a temperature of from 950°C to 1500°C in a non-oxidizing gas atmosphere. The main heat treatment may be performed in accordance with the procedure of an ordinary main heat treatment. The main heat treatment is performed to produce a heat-treated carbon. For the main heat treatment, it is preferable to use a continuous reaction device, which is not limited, such as a moving bed type, a fluidized bed type, and an entrained flow type, provided that the continuous reaction device is capable of performing heat treatment at a temperature of 950°C or higher in a non-oxidizing gas atmosphere. Among these, it is preferable to use the rotary kiln described in WO 2019/235586, for the rotary kiln is capable of preventing contamination inside the furnace due to condensation of exhaust gas traveling to the low temperature part.

The lower limit of the main heat treatment temperature according to an embodiment of the present invention is 950°C or higher, more preferably 1050°C or higher, even more preferably 1100°C or higher, and particularly preferably 1150°C or higher. When the main heat treatment temperature is increased, sodium is more likely to volatilize from the carbonaceous material. In contrast, when the main heat treatment temperature is too low, carbonization may be insufficient, and the irreversible capacity may increase. That is, a large amount of functional groups may remain in the carbonaceous material, the value of H/C may increase, the difference between the doping capacity and the de-doping capacity may increase due to the reaction with lithium, and the lithium in the positive electrode may be wasted. Meanwhile, the upper limit of the main heat treatment temperature according to an embodiment of the present invention is 1500°C or lower, more preferably 1400°C or lower, and particularly 1300°C or lower. When the main heat treatment temperature exceeds 1500°C, the cavities formed as lithium storage sites may decrease, and the doping/de-doping capacity may decrease.

Main heat treatment is preferably performed in a non-oxidizing gas atmosphere. Examples of the non-oxidizing gas include noble gases such as helium and argon, or nitrogen; these may be used alone or in a combination. Furthermore, main heat treatment can be performed under reduced pressure at a pressure of not higher than 10 kPa, for example. The retention time of the main heat treatment is not limited. In a case of batch heat treatment, the time during which a heat treated product is retained in a temperature range from the temperature 20°C lower than the maximum temperature reached to the maximum temperature reached is called the "main heat treatment time"; meanwhile, in a case of continuous heat treatment, the time during which a heat treated product passes through in a temperature range from the temperature 20°C lower than the maximum temperature reached to the maximum temperature reached is called the "main heat treatment time". When the main heat treatment time is less than 1 minute, it is difficult to evenly complete the heat treatment reaction, which is not preferable. The main heat treatment temperature is preferably 1 minute or more, and more preferably 2 minutes or more, such as 3 minutes or more. From the viewpoint of energy efficiency, it is not preferable to retain the heat treated product at the main heat treatment temperature even after the carbonization reaction is completed. The main heat treatment time is preferably 3 hours or less, more preferably 1 hour or less, even more preferably 30 minutes or less, and particularly preferably 15 minutes or less.

(3) Coating step

The production method according to an embodiment of the present invention includes a step of coating the heat-treated carbon produced in the main heat treatment with pyrolytic carbon. In the heat-treated carbon produced by subjecting the resol type phenol resin as a carbon source to the main heat treatment, tiny cavities are formed by an alkali-activation reaction. Although the details are not clear, the cavities have pores that are not suitable for storing lithium, such as pores that may be permeated by an electrolyte solution. By coating the heat-treated carbon with pyrolytic carbon, the cavities may be conditioned to form pores suitable for storing lithium, and consequently, the de-doping capacity of secondary battery may be significantly increased.

The coating treatment of pyrolytic carbon may adopt a chemical vapor deposition (hereinafter referred to as "CVD") method. Specifically, the heat-treated carbon is brought into contact with a hydrocarbon gas, and pyrolytic carbon generated by gas-phase thermolysis is vapor-deposited onto the heat-treated carbon.

The hydrocarbon, which is a carbon source for pyrolytic carbon used in the coating step according to an embodiment of the present invention, is a gas at the thermolysis reaction temperature, and is not limited, provided that the hydrocarbon can reduce the specific surface area of the heat-treated carbon.

Examples of the hydrocarbon include methane, ethane, propane, butane, pentane, hexane, octane, nonane, decane, ethylene, propylene, butene, pentene, hexene, acetylene, cyclopentane, cyclohexane, cycloheptane, cyclooctane, cyclononane, cyclopropene, cyclopentene, cyclohexene, cycloheptene, cyclooctene, decalin, norbornene, methylcyclohexane, norbornadiene, benzene, toluene, xylene, mesitylene, cumene, butylbenzene, and styrene; these may be used alone or in a combination as needed. Pyrolytic carbon derived from an aromatic compound may form a dense film and inhibit the diffusion of lithium. As such, an aliphatic hydrocarbon is preferable as the carbon source of pyrolytic carbon. However, by controlling the CVD conditions, even pyrolytic carbon derived from an aromatic compound may be appropriately coated. Further, a gaseous organic substance may also be used as the hydrocarbon gas, or a hydrocarbon gas generated by heating and vaporizing a solid or liquid organic substance may also be used as the hydrocarbon gas.

In this manner, the surface of the heat-treated carbon may be coated with pyrolytic carbon by subjecting the heat-treated carbon to a CVD treatment in the hydrocarbon gas. The thermolysis reaction may be controlled by diluting the hydrocarbon gas with a non-oxidizing gas to form a mixed gas. Examples of the non-oxidizing gas include nitrogen, or a noble gas such as helium and argon, or a combination thereof. Since the hydrocarbon gas is pyrolyzed to form a film, it is necessary to control the reaction by the concentration of carbon atoms in the mixed gas. The more carbon atoms constituting the hydrocarbon, the higher the concentration of carbon atoms in the hydrocarbon gas. For example, the concentration of carbon atoms in 1 mol of hexane is 72 g/mol [3.21 g/L (NTP)], and the concentration of carbon atoms in propane is 36 g/mol [1.61 g/L (NTP)]. Even if the volumes of hydrocarbon gases are the same, hexane contains twice as many carbon atoms as propane does. When the concentration of carbon atoms in the mixed gas of the non-oxidizing gas and the hydrocarbon gas is too low, less pyrolytic carbon is generated, which is not preferable. The carbon atom concentration in the mixed gas is preferably 0.05 g/L (NTP) or greater, more preferably 0.10 g/L (NTP) or greater, and particularly preferably 0.15 g/L (NTP) or greater. Meanwhile, when the concentration of carbon atoms in the mixed gas is too high, a large amount of pyrolytic carbon adheres to the wall surface of the CVD treatment furnace, making it difficult to evenly coat the heat-treated carbon with pyrolytic carbon, which is not preferable.

The temperature of the CVD treatment is not limited, and is preferably from 600°C to 1500°C, more preferably from 650°C to 1000°C, and even more preferably from 700°C to 950°C.

The time of contact between the hydrocarbon gas and the heat-treated carbon is not limited, and may be, for example, preferably from 10 minutes to 5.0 hours, more preferably from 15 minutes to 3 hours. However, the preferable time of contact differs depending on the heat-treated carbon to be coated, and in general, the longer the time of contact, the smaller the specific surface area of the produced carbonaceous material. That is, the coating treatment is preferably performed under conditions that a specific surface area of the produced carbonaceous material becomes less than 30 m$^2$/g. Note that the specific surface area of the carbonaceous material can be controlled by adjusting, for example, the carbon atom concentration in atmospheric gas, the CVD treatment temperature, or the time of contact between the hydrocarbon gas and the heat-treated carbon.

Further, the device used in the coating step according to the present embodiment is not limited, and coating may be carried out by, for example, in-layer circulation method in a continuous or batch manner by a fluidized bed used in a fluidized reactor, a rotary kiln, or the like. The amount of gas fed (circulated amount) is also not limited.

The production method according to an embodiment of the present invention may include a washing step of washing the heat-treated carbon and removing sodium in order to wash and remove sodium derived from the sodium-based basic catalyst in the resol type phenol resin and the compounds thereof. Such washing is not limited, and may be performed after the heat treating step. The washing is preferably performed on the heat-treated carbon after the heat treating step and prior to the coating step.

When a large amount of sodium and sodium compounds remain in the carbonaceous material, the carbonaceous material becomes highly alkaline. Further, when sodium remains in the carbonaceous material, sodium may move to the counter electrode at the time of discharge of the secondary battery, which may adversely affect the charge/discharge characteristics. As such, the smaller the content of sodium and sodium compounds, the more preferable the carbonaceous material.

According to the method of producing a carbonaceous material for a negative electrode of a non-aqueous electrolyte secondary battery as described above, a carbonaceous material having a large de-doping capacity can be produced without the addition of a sodium compound to a carbon precursor. Such a carbonaceous material is a non-graphitizable carbon, and has a small expansion and shrinkage during doping/de-doping of lithium; as such, when applied to an all-solid-state battery, such a carbonaceous material also has a shape stability that enables formation of a stable interface structure with a solid electrolyte.

Carbonaceous material for a negative electrode of a non-aqueous electrolyte secondary battery

The description has been given for the method of producing a carbonaceous material for a negative electrode of a non-aqueous electrolyte secondary battery. Hereinafter, an example of the characteristics of the carbonaceous material for a negative electrode of a non-aqueous electrolyte secondary battery that can be produced by the method will be described. Physical properties of the carbonaceous material for a negative electrode of a non-aqueous electrolyte secondary battery according to an embodiment of the present invention are not limited, and for example, the true density measured by a pycnometer method with butanol is from 1.20 to 1.60 g/cm$^3$, the specific surface area determined by a BET method using nitrogen adsorption is 30 m$^2$/g or less, the average particle size is 50 $\mu$m or less, and the atom ratio of hydrogen atoms to carbon atoms (H/C) determined by elemental analysis is 0.1 or less.

True density

The true density of defect-free graphite crystals is 2.27 g/cm$^3$, and the true density tends to decrease as the crystal structure becomes disordered. Accordingly, the true density is an indicator expressing the carbon structure. The true density described in the present specification was measured by a pycnometer method with butanol.

The true density of the carbonaceous material for a negative electrode of a non-aqueous electrolyte secondary battery according to an embodiment of the present invention is preferably from 1.20 g/cm$^3$ to 1.60 g/cm$^3$. The upper limit of the true density is more preferably 1.55 g/cm$^3$ or less, even more preferably 1.50 g/cm$^3$ or less, particularly preferably 1.48 g/cm$^3$ or less, and most preferably 1.47 g/cm$^3$ or less. The lower limit of the true density is more preferably 1.25 g/cm$^3$ or greater, even more preferably 1.30 g/cm$^3$ or greater, particularly preferably 1.35 g/cm$^3$ or greater, and most preferably 1.37 g/cm$^3$ or greater. A carbonaceous material having a true density exceeding 1.60 g/cm$^3$ may have a small pore volume capable of storing lithium and a small de-doping capacity. Meanwhile, in the case of a carbonaceous material having a true density of less than 1.20 g/cm$^3$, the electrolyte solution may permeate the pores, making the pores unable to serve as lithium storage sites. Further, the structure of the carbonaceous material may be gradually weakened, and the pore structure of carbon may be damaged at the time of producing an electrode.

Average particle size D$_{v50}$

The average particle size D$_{v50}$ of the carbonaceous material according to an embodiment of the present invention is preferably from 1 to 50 $\mu$m. The lower limit of the average particle size is more preferably 1.5 $\mu$m or greater, and even more preferably 2.0 $\mu$m or greater. When the average particle size is less than 1 $\mu$m, fine powder increases, the reaction area with the electrolyte solution increases, lithium is consumed in the surface reaction between the electrolyte solution and the carbonaceous material, and the irreversible capacity, which is a capacity that does not discharge even when charged, also increases, leading to an increase in the percentage of lithium in the positive electrode that is wasted, which is not preferable. The upper limit of the average particle size is preferably 50 $\mu$m or less, more preferably 30 $\mu$m or less, even more preferably 20 $\mu$m or less, particularly preferably 15 $\mu$m or less, and most preferably 10 $\mu$m or less. When the average particle size exceeds 50 $\mu$m, the outer surface area decreases, and rapid charging and discharging becomes difficult, which is not preferable. Here, average particle size D$_{v50}$ means the particle size at the point of 50% of the cumulative size distribution on a cumulative curve plotted from the small particle sizes to the large particle sizes, assuming that the total volume of the particles is 100%.

Specific surface area

The specific surface area of the carbonaceous material may be determined with an approximation formula derived from a BET formula based on nitrogen adsorption. The specific surface area of the carbonaceous material according to an embodiment of the present invention is preferably 30 m$^2$/g or less. When the specific surface area exceeds 30 m$^2$/g, the amount of reaction between the carbonaceous material and the electrolyte solution increases, and lithium in the positive electrode is wasted; this may result in an increase in the irreversible capacity, which is the difference between the doping capacity and the de-doping capacity, and the battery performance may deteriorate. The upper limit of the specific surface area is preferably less than 30 m$^2$/g, more preferably less than 20 m$^2$/g, particularly

preferably less than 10 m²/g, and most preferably less than 5 m²/g. Meanwhile, when the specific surface area is less than 0.1 m²/g, the input/output characteristics may deteriorate, and as such, the lower limit of the specific surface area is preferably 0.1 m²/g or greater, even more preferably 0.5 m²/g or greater.

Product of average particle size and specific surface area

The smaller the average particle size, the greater the specific surface area. When the product of the average particle size $D_{v50}$ (μm) of the carbonaceous material and the specific surface area SSA (m²/g) is represented by "DS (cm³/g)", DS is an indicator of the surface area that is not affected by the particle size with respect to the specific surface area. DS is preferably from 2 to 200 cm³/g. When DS is less than 2 cm³/g, the doping area of lithium in the particles decreases, which is not preferable. DS is preferably 2 cm³/g or greater, even more preferably 5 cm³/g or greater, particularly preferably 10 cm³/g or greater, and most preferably 15 cm³/g. When DS exceeds 200 cm³/g, the lithium storage sites in the particles decrease, which is not preferable. DS is preferably 200 cm³/g or less, more preferably 150 cm³/g or less, further preferably 100 cm³/g or less, and particularly preferably 50 cm³/g or less.

Atom ratio of hydrogen atoms to carbon atoms (H/C)

The atom ratio of hydrogen atoms to carbon atoms (H/C) is determined from the contents of hydrogen atoms and carbon atoms measured by an elemental analysis. As the degree of carbonization of a carbonaceous material increases, the hydrogen content decreases and thus the H/C ratio tends to decrease. Accordingly, the H/C is effective as an index expressing the degree of carbonization. The H/C of the carbonaceous material according to an embodiment of the present invention is preferably 0.1 or less, and more preferably 0.08 or less. The H/C is particularly preferably 0.05 or less. When the H/C exceeds 0.1, the amount of functional groups present in the carbonaceous material increases, which may increase the irreversible capacity due to a reaction with lithium.

Average interlayer spacing $d_{002}$

When a carbonaceous material having an average interlayer spacing $d_{002}$ of less than 0.36 nm figured out by powder X-ray diffraction is used in the negative electrode to constitute a non-aqueous electrolyte secondary battery, the doping capacity of the battery active material decreases. Further, in a carbonaceous material having an average interlayer spacing $d_{002}$ exceeding 0.42 nm, the irreversible capacity of active material calculated as the difference between the doping capacity and the de-doping capacity increases. The average interlayer spacing $d_{002}$ is even more preferably from 0.37 nm to 0.41 nm, and particularly preferably from 0.37 nm to 0.40 nm.

[2] Method of producing a negative electrode for a non-aqueous electrolyte secondary battery

The method of producing an electrode of a non-aqueous electrolyte secondary battery according to an embodiment of the present invention includes: producing a carbonaceous material for a negative electrode of a non-aqueous electrolyte secondary battery by the method of producing a carbonaceous material for a negative electrode of a non-aqueous electrolyte secondary battery according to [1], and then producing an electrode of a non-aqueous electrolyte secondary battery using the carbonaceous material for a negative electrode of a non-aqueous electrolyte secondary battery.

First, a case in which an electrolyte solution is used as an electrolyte of a non-aqueous electrolyte secondary battery will be described. A negative electrode that uses the carbonaceous material according to an embodiment of the present invention can be produced by adding a binding agent (binder) and a solvent to the carbonaceous material to prepare an electrode mixture, coating a current collector with the electrode mixture and performing drying, and then performing pressing. Also, a conductive additive may be added as necessary at the time of preparing the electrode mixture for the purpose of imparting even higher conductivity.

The added amount of the conductive additive above is preferably from 0.5 to 15 mass%, or may be from 0.5 to 7 mass%, or may be from 0.5 to 5 mass%, with respect to the total amount of the active material (carbonaceous material), the binder, and the conductive additive, the total amount being 100 mass%.

The binding agent above is not limited as long as it is a binding agent that does not react with the electrolyte solution. The thicker the electrode active material layer, the less the current collector, separator, or the like needed, which is preferable from the viewpoint of increasing capacity. Meanwhile, the larger the electrode area facing the counter electrode, the more advantageous it is for improving the input/output characteristics; as such, when the thickness of the electrode active material layer is excessive, the input/output characteristics deteriorate, which is not preferable. The thickness per side of the active material layer is not limited, and is preferably in a range from 40 μm to 500 μm, or may be in a range from 40 to 400 μm, or may be in a range from 50 to 350 μm.

A negative electrode usually has a current collector. The current collector of the negative electrode is not limited as long as it is a metal that does not dissolve within the potential change range during charging and discharging.

Next, a case in which a solid electrolyte is used as an electrolyte of a non-aqueous electrolyte secondary battery will be described. In an all-solid-state battery, a gel polymeric material, an organic/inorganic solid electrolyte material, or the like is used as the electrolyte material. When an all-solid-state battery is formed, a solid electrolyte and the carbonaceous material according to an embodiment of the present invention can be mixed and molded to produce a negative electrode. The binding agent above and the conductive additive above may be added to the negative electrode as necessary.

[3] Method of producing a non-aqueous electrolyte secondary battery

The method of producing a non-aqueous electrolyte secondary battery according to an embodiment of the present invention includes producing a non-aqueous electrolyte secondary battery using the electrode of a non-aqueous electrolyte secondary battery produced by the production method described in [2] above.

In the method of producing a non-aqueous electrolyte secondary battery according to an embodiment of the present invention, other materials constituting a battery, such as a positive electrode material, a negative electrode material, a separator (porous polymer film, solid electrolyte, etc.), and an electrolyte (electrolyte solution, solid electrolyte, etc.) are not limited, and various materials conventionally used in or proposed for a non-aqueous electrolyte secondary battery can be used.

Cathode

The positive electrode contains a positive electrode active material, and may further contain a conductive additive, a binder, or a solid electrolyte as necessary. The mixing ratio of the positive electrode active material and another material in the positive electrode active material layer is not limited and may be selected as appropriate, as long as the effect according to an embodiment of the present invention can be achieved.

The positive electrode active material can be any well-known positive electrode active materials.

The positive electrode may further contain a conductive additive and/or a binder. The content of the conductive additive and the content of the binder is not limited, but may be from 0.5 to 15 mass%, for example.

The positive electrode usually has a current collector. The current collector of the positive electrode is not limited as long as it is a metal that does not dissolve within the potential change range during charging and discharging.

Electrolyte solution

The electrolyte solution is formed, for example, by dissolving an electrolyte salt in a non-aqueous solvent. The secondary battery is typically formed by making a positive electrode layer and a negative electrode layer formed as described above face one another via a liquid-permeable separator made of a nonwoven fabric or another porous material as necessary and immersing the product in the electrolyte solution.

Solid electrolyte

The solid electrolyte is not limited as long as it is a substance having ionic conductivity of lithium in a solid state. Examples of an inorganic solid electrolyte include an oxide-based solid electrolyte and a sulfide-based solid electrolyte.

Separator

A liquid permeable separator made of a nonwoven fabric or another porous material can be used as the separator. Alternatively, a polymer gel impregnated with an electrolyte solution or an inorganic solid electrolyte can also be used in place of such a separator, or together with a separator.

Optimal structure of negative electrode material

Firstly, an optimal structure of a negative electrode material for a non-aqueous electrolyte secondary battery is a structure in which the negative electrode material has cavities that allow the storage of a large amount of lithium. In the pore structure of the carbonaceous material, various pores are widely distributed. Because pores that can be permeated by the electrolyte solution are the equivalent of an outer surface electrochemically, such pores can not serve as stable storage sites for lithium. The storage sites for lithium are pores through which it is difficult for the electrolyte solution to permeate and which allow lithium to reach every corner thereof at the time of lithium doping. The expression "pores which allow lithium to reach every corner thereof" includes pores through which lithium can disperse within the carbon particles, and may refer to pores that allow lithium to be dispersed to the inside of carbon while the spacing is widened between hexagonal carbon layers during this process.

Secondly, an optimal structure of a negative electrode material for a non-aqueous electrolyte secondary battery include a structure which makes it possible to reduce the irreversible capacity, which is the difference between the lithium storage capacity and de-doping capacity measured at the beginning of the doping and de-doping reactions - that is, a structure in which there are few decomposition reactions of the electrolyte solution on the carbon particle surface. Since the electrolyte solution decomposes at the surface of a graphitic material, a non-graphitic material is preferable. Further, it is known that the edge surface of carbonaceous material is highly reactive. The activation method is a method of forming pores. In pore formation by an oxidizer such as water vapor, pores are formed by oxidative decomposition of the carbon skeleton, and sites from which carbon disappears becomes an edge surface, which is not preferable. Meanwhile, in a method such as alkali-activation, it is possible to suppress the formation of edge surface because pores are formed by expanding the carbon layer surface. As such, a structure that suppresses the formation of edge surface in the process of forming the pore structure and has less decomposition reaction of the electrolyte solution is preferable.

Regarding the negative electrode material for a non-aqueous electrolyte secondary battery according to an embodiment of the present invention, the resol type phenol resin using a sodium basic catalyst is heat-treated, and an alkali-activation reaction by sodium occurs during the heat treatment; as such, a pore structure is formed while the formation of edge surface is being suppressed. Furthermore, the produced heat-treated carbon is heat-treated in an atmosphere containing an aliphatic hydrocarbon; as such, pyrolytic carbon generated from the aliphatic carbon covers the inside of the pores, reducing the formation of edge surface that is highly reactive while forming an optimal pore structure for lithium storage. As such, it is conceivable that the negative electrode material for a non-aqueous electrolyte secondary battery according to an embodiment of the present invention has a structure with cavities that make it possible to store a large amount of lithium in the negative electrode material.

**[EXAMPLES]**

Hereinafter, the present invention will be described in further detail with reference to examples according to the present invention. The present invention is not limited by the following examples in any way.

Preparation of sample

Each of the samples of the carbonaceous material was prepared by the production method described below. The preparation conditions are shown in Table 1.

Example 1

200 g of phenol and 177.3 g of a 36 mass% formalin were placed in a separable flask and mixed; then, 20 g of a 30 mass% sodium hydroxide aqueous solution was further added, and the mixture was retained at from 85 to 95°C for 4.5 hours with being stirred to carry out an addition condensation reaction. After the addition condensation reaction was completed, the mixture was allowed to cool to room temperature, and an initial condensate was produced. The initial condensate was heated at 150°C for 7 hours to proceed with a dehydration condensation reaction, resulting in a resol type phenol resin. Next, the resol type phenol resin was pulverized and sieved to collect particles having a particle size from 297 to 500 $\mu$m; the particles were inserted into a vertical tubular furnace with a perforated plate, and subjected to a pre-heat treatment in a nitrogen stream at 400°C for 10 hours. The produced pre-heat-treated carbon was pulverized by a rod mill, resulting in a powdered pre-heat-treated carbon. Next, the powdered pre-heat-treated carbon was inserted into a horizontal tubular furnace, and a main heat treatment was performed by retaining the powdered pre-heat-treated carbon in a nitrogen stream at 1110°C for 1 hour; the product was then cooled, and a heat-treated carbon was produced.

Next, 5 g of the produced heat-treated carbon was placed in a quartz reaction tube and heated and retained at 750°C in a nitrogen gas stream. The heat-treated carbon was then coated with pyrolytic carbon by replacing the nitrogen gas flowing into the reaction tube with a mixed gas of hexane and nitrogen gas. The injection rate of nitrogen gas was 100 mL/min, and the injection rate of hexane was 0.3 g/min; after injecting the mixed gas for 30 minutes, the supply of hexane was stopped, and the gas in the reaction tube was replaced with nitrogen. The product was then allowed to cool, and a sample of a carbonaceous material was produced.

Example 2

A carbonaceous material sample was produced by the same procedure as in Example 1 except that the main heat treatment temperature was set to 1200°C.

Example 3

A carbonaceous material sample was produced by the same procedure as in Example 2 except that the amount of the 36 mass% formalin used was 354.5 g and that the retention time of the addition condensation reaction (reaction at a temperature of from 85 to 95°C) was 1.5 hours.

Example 4

A carbonaceous material sample was produced by the same procedure as in Example 2 except that the amount of the 30 mass% sodium hydroxide aqueous solution used was 33.4 g and that the reaction time of the addition condensation reaction was 4.5 hours.

Example 5

A carbonaceous material sample was produced by the same procedure as in Example 2 except that the amount of the 30 mass% sodium hydroxide aqueous solution used was 6.7 g.

Example 6

A carbonaceous material sample was produced by the same procedure as in Example 2 except that the amount of the 36% formalin used was 88.6 g, the reaction at a temperature of from 85 to 95°C was 6 hours, and that the heat-treated carbon was coated with pyrolytic carbon in such a manner that a mixed gas of 50 mL of propane gas and 100 mL of nitrogen gas was reacted at 750°C for 30 minutes.

Example 7

A carbonaceous material sample was produced by the same procedure as in Example 2 except that the heat-treated carbon was coated with pyrolytic carbon in such a manner that a mixed gas of 50 mL of butane gas and 100 mL of nitrogen gas was reacted at 750°C for 30 minutes.

Example 8

A carbonaceous material sample was produced by the same procedure as in Example 2 except that the heat-treated carbon produced was further stirred in a 2 mass% hydrochloric acid at 90°C for 2 hours, then washed with water and dried.

Example 9

A carbonaceous material sample was produced by the same procedure as in Example 2 except that 40 g of a 25 mass% sodium hydrogen carbonate aqueous solution, dissolved in warm water, was added instead of the 20 g of a 30 mass% sodium hydroxide aqueous solution, and that the retention time of the addition condensation reaction was 6 hours.

Comparative Example 1

A carbonaceous material sample was produced by the same procedure as in Example 2 except that the treatment of coating the heat-treated carbon with pyrolytic carbon was not performed.

Comparative Examples 2 and 3

Carbonaceous material samples were produced by the same procedure as in Example 2 except that the main heat treatment temperature was changed to 1000°C for Comparative Example 2, and the main heat treatment temperature was changed to 1600°C for Comparative Example 3.

Comparative Example 4

A carbonaceous material sample was produced by the same procedure as in Example 2 except that a 30% potassium hydroxide aqueous solution was used instead of the 30 mass% sodium hydroxide aqueous solution, and that the pre-heat treatment was performed at 650°C for 2 hours.

Comparative Example 5

200 g of phenol and 177.3 g of a 36 mass% formalin were placed in a separable flask and mixed; then, 13.8 g of a 29 mass% ammonia water was further added, and the mixture was retained at a temperature of from 85 to 95°C for 2 hours with being stirred to carry out an addition condensation reaction. After the addition condensation reaction was completed, the mixture was allowed to cool to room temperature, and an initial condensate was produced. The produced initial condensate was heated at 150°C for 7 hours to proceed with a dehydration condensation reaction, resulting in 220.11g of a resol type phenol resin. A carbonaceous material sample was produced by the same procedure as in Example 2 except that the resol phenol resin was used.

Comparative Example 6

200 g of phenol and 354.5 g of a 36 mass% formalin were placed in a separable flask and mixed; then, 20 g of a 15 mass% hydrochloric acid was further added, and the mixture was retained at a temperature of 70°C for 2 hours with being stirred to carry out an addition condensation reaction. After the addition condensation reaction was completed, the mixture was allowed to cool to room temperature, and an initial condensate was produced. The obtained initial condensate was subjected to a dehydration condensation reaction at 150°C for 12 hours in a hot air drier, resulting in a novolac type phenol resin. Next, the novolac type phenol resin was pulverized, sieved, and subjected to a pre-heat treatment in a nitrogen stream at 650°C for 2 hours. The obtained pre-heat-treated carbon was pulverized by a rod mill, resulting in a powdered pre-heat-treated carbon. Next, the powdered pre-heat-treated carbon was inserted into a horizontal tubular furnace, and a main heat treatment was performed by retaining the powdered pre-heat-treated carbon in a nitrogen stream at 1200°C for 1 hour; the product was then cooled, and a carbonaceous material sample was produced.

Next, 5 g of the produced heat-treated carbon was placed in a quartz reaction tube and heated and retained at 750°C in a nitrogen gas stream. The heat-treated carbon was then coated with pyrolytic carbon by replacing the nitrogen gas flowing into the reaction tube with a mixed gas of hexane and nitrogen gas. The injection rate of nitrogen gas was 100 mL/min, and the injection rate of hexane was 0.3 g/min; after 30 minutes of injection, the supply of hexane was stopped, and the gas in the reaction tube was replaced with nitrogen. The product was then allowed to cool, and a carbonaceous material sample was produced.

Comparative Example 7

70 kg of a petroleum pitch, which has a softening point of 205°C and an atom ratio H/C of 0.65, and 30 kg of naphthalene were inserted into a pressure-resistant container having an internal volume of 300 liters and a stirring blade, and the substances were melted and mixed while heating. The petroleum pitch that had been heated, melted, and mixed was cooled and then pulverized. The pulverized product was put into hot water, dispersed under stirring, and cooled, resulting in a spherical pitch compact. After water was filtered off, naphthalene was extracted and removed from the spherical pitch compact with n-hexane, resulting in a porous spherical pitch. Then, the porous spherical pitch was oxidized with heated air, resulting in a heat-infusible porous spherical oxidized pitch. The oxygen content (the degree of oxygen crosslinking) of the porous spherical oxidized pitch was 13 mass%. Next, the infusible porous spherical oxidized pitch was pulverized by a jet mill (AIR JET MILL available from Hosokawa Micron Co., Ltd.; MODEL 100AFG), resulting in a pulverized carbonaceous material precursor (pulverized carbon precursor) having an average particle size from 20 to 25 $\mu$m. The pulverized carbonaceous material precursor produced was impregnated with a sodium hydroxide (NaOH) aqueous solution; then, the product was subjected to heated dehydration under reduced pressure, resulting in a pulverized carbonaceous material precursor loaded with 7.0 mass% of NaOH with respect to the pulverized carbonaceous material precursor. Next, 10 g of the pulverized carbonaceous material precursor impregnated with NaOH was placed in a horizontal tubular furnace and subjected to a pre-heat treatment by retaining the precursor in a nitrogen atmosphere at 600°C for 10 hours, resulting in a pre-heat-treated carbon. Next, the pre-heat-treated carbon was inserted into a horizontal tubular furnace and then subjected to a main heat treatment by retaining the pre-heat-treated carbon at 1200°C for 1 hour, resulting in a carbonaceous material sample.

Comparative Example 8

5 g of the carbonaceous material produced in Comparative Example 7 was placed in a quartz reaction tube and heated and retained in a nitrogen gas stream at 750°C. A treatment of coating the heat-treated carbon with pyrolytic carbon was then performed by replacing the nitrogen gas flowing into the reaction tube with a mixed gas of hexane and nitrogen gas. The injection rate of hexane was 0.3 g/min; after 30 minutes of injection, the supply of hexane was stopped, and the gas in the reaction tube was replaced with nitrogen. The product was then allowed to cool, and a carbonaceous material sample coated with pyrolytic carbon was produced.

Comparative Example 9

A carbonaceous material sample was produced by the same procedure as in Comparative Example 5 except that the heat-treated carbon was not coated with pyrolytic carbon.

Measurement of physical properties

For the values of physical properties of the carbonaceous material samples used in Examples 1 to 9 and Comparative Examples 1 to 9, "atom ratio of hydrogen/carbon (H/C)", "average particle size $D_{v50}$)", "specific surface area SSA", "true density", and "average interlayer spacing $d_{002}$" were measured by the methods described below. In addition, the products (DS) of the average particle diameter $D_{v50}$ and the specific surface area SSA were calculated using the obtained numeric values of the average particle diameter $D_{v50}$ and the specific surface area SSA. The measurement results are shown in Table 2 below. Note that the physical property values described in the present specification are based on the values obtained by the following methods.

Atom ratio (H/C) of hydrogen/carbon

Each of the elements hydrogen and carbon in the sample was measured in accordance with the method stipulated in JIS M8819. The ratio of the numbers of hydrogen/carbon atoms was determined from the mass ratio of hydrogen and carbon in a sample as determined by elemental analysis using a CHN analyzer.

Specific surface area (SSA)

The specific surface area was measured by a one-point BET (Brunauer, Emmett and Teller) method in accordance with the method stipulated in JIS Z8830:2013 (ISO9277:2010) "method for measuring specific surface area of powder (solid) by gas adsorption". The measurement of the amount of adsorbed gas was performed using a carrier gas method. A test tube was filled with a sample, and the test tube was cooled to -196°C while helium gas containing nitrogen gas at a concentration of 20 mol% was being purged, so that the nitrogen was adsorbed in the sample. The test tube was then returned to room temperature. The amount of nitrogen desorbed from the sample at that time was measured with a thermal conductivity detector and used as the amount of adsorbed gas. In the calculation of specific surface area, the numeric value 0.162 $nm^2$ was employed as a molecular cross-sectional area of nitrogen.

True density

The true density was measured using 1-butanol in accordance with the method stipulated in JIS R7212:1995. The summary will be described below.

The mass ($m_1$) of a pycnometer having an internal volume of approximately 40 mL was precisely measured. Next, after a sample was placed flat at the bottom of the pycnometer so that the thickness of the sample was approximately 10 mm, the mass ($m_2$) was precisely measured. Next, 1-butanol was slowly added to the pycnometer to a depth of approximately 20 mm from the bottom. Next, the pycnometer was gently oscillated, and after it was confirmed that no large bubbles were generated, the pycnometer was placed in a vacuum desiccator, and the vacuum desiccator was gradually evacuated to a pressure from 2.0 to 2.7 kPa. The pressure was maintained for 20 minutes or more, and after the generation of bubbles stopped, the pycnometer was removed from the vacuum desiccator. Then, the pycnometer was filled with 1-butanol. After a stopper was inserted, the pycnometer was immersed in a constant-temperature water bath (adjusted to 30 $\pm$ 0.03°C) for 15 minutes or longer, and the liquid surface of 1-butanol was aligned with the marked line. Next, the pycnometer was taken out from the constant-temperature water bath, and the outside of the pycnometer was thoroughly wiped; thereafter, the pycnometer was cooled to room temperature, and the mass ($m_4$) of the pycnometer was precisely measured.

Next, a pycnometer having the same internal volume was filled with 1-butanol alone and immersed in a constant-temperature water bath in the same procedure as described above; after the alignment with the marked line, the mass ($m_3$) of the pycnometer was measured. In addition, distilled water which was boiled immediately before use to remove the dissolved gas was placed in the pycnometer and immersed in a constant-temperature water bath in the same procedure as described above. After the alignment with the marked line, the mass ($m_5$) of the pycnometer was measured. The true density ($\rho_{Bt}$) of a sample is calculated using the following equation.

(Equation 1)

$$\rho_{Bt} = \frac{m_2 - m_1}{m_2 - m_1 - (m_4 - m_3)} \times \frac{m_3 - m_1}{m_5 - m_1} d$$

where d is the specific gravity (0.9946) of water at 30°C.

Average particle size $D_{v50}$

Three drops of a dispersant (cationic surfactant, "SN-WET 366", available from San Nopco Limited) were added to approximately 0.1 g of a sample, and the dispersant was blended into the sample. Next, 30 mL of purified water was added, and after the sample was dispersed for approximately 2 minutes with an ultrasonic washer, the particle size distribution within a particle size range from 0.021 to 2000 $\mu$m was determined using a particle size distribution analyzer ("MT3300EX" available from MicrotracBEL Corp.). From the determined particle size distribution, the particle size at which a cumulative volume became 50% was taken as the average particle size $D_{v50}$ ($\mu$m).

Average interlayer spacing $d_{002}$ of carbonaceous material

An aluminum sample cell was filled with a carbonaceous material powder, and an X-ray diffraction pattern was generated by a reflection-type diffractometer method using CuK$\alpha$ rays (wavelength $\lambda$ = 0.15418 nm) monochromated by a graphite monochromator or a Ni filter as the radiation source. As for the correction of the diffraction pattern, no correction with respect to the Lorentz polarization factor, absorption factor, atomic scattering factor, etc. was performed, and only the correction of double lines of K$\alpha_1$ and K$\alpha_2$ was performed in accordance with the Rachinger's method. The peak position of the (002) diffraction line was determined by the center of gravity method (a method wherein the position of a gravity center of diffraction lines is determined to set a peak position as a 2$\theta$ value corresponding to the gravity center) and corrected with the (111) diffraction line of high-purity silicon powder as the standard substance. The $d_{002}$ value was calculated in accordance with the Bragg's formula below.

(Equation 2)

$$d_{002} = \frac{\lambda}{2 \cdot \sin \theta} \qquad \text{(Bragg's equation)}$$

Evaluation of capacity

Doping and de-doping test of active material

Using the carbonaceous materials for a non-aqueous electrolyte secondary battery produced in Examples 1 to 9 and Comparative Examples 1 to 9, non-aqueous electrolyte secondary batteries were produced by the method described below, and the characteristics of the non-aqueous electrolyte secondary batteries were evaluated. These results are shown in Table 2 below.
The carbonaceous material according to an embodiment of the present invention is suitable for being used as a negative electrode of a non-aqueous electrolyte secondary battery. However, regarding the evaluation of battery performance of the carbonaceous material of the present examples, in order to precisely evaluate the doping capacity, de-doping capacity, and non-dedoping capacity of the battery active material without being affected by fluctuation in the performance of the counter electrode, lithium secondary batteries were configured using metal lithium, which has stable characteristics, as the negative electrode and the carbonaceous materials produced above as the positive electrode, and the characteristics of the lithium secondary batteries were evaluated.

The positive electrodes (carbon electrodes) were produced as follows. N-methyl-2-pyrrolidone was added to 90 parts by weight of a carbonaceous material sample of Examples 1 to 9 and Comparative Examples 1 to 9 and 10 parts by weight of polyvinylidene fluoride, resulting in a paste-like coating liquid. The coating solution was applied evenly onto an aluminum foil and dried, resulting in a coating film; the coating film was peeled off from the aluminum foil and punched into a disk shape having a diameter of 15 mm, resulting in a disk-shaped carbonaceous film. Next, after spot-welding a stainless steel mesh disk having a diameter of 16 mm on the inner lid of a 2016-size (that is, a diameter of 20 mm and a thickness of 1.6 mm) coin-type battery can, the disk-shaped carbonaceous film described above was pressed onto the mesh disk by a press and crimped, resulting in a positive electrode. The amount of the carbonaceous material in the positive electrode (carbon electrode) was set to approximately 20 mg.

The negative electrode (lithium electrode) was prepared inside a glove box in an argon atmosphere. A thin sheet of metal lithium having a thickness of 0.5 mm was punched into a disk having a diameter of 15 mm. After spot-welding a stainless steel mesh disk having a diameter of 16 mm on the outer lid of a 2016-size coin-type battery can, the disk-shaped thin sheet of metal lithium described above was pressed onto the mesh disk by a press and crimped, resulting in a negative electrode.

A 2016-size coin-type non-aqueous solvent-type lithium secondary battery was assembled in an argon glove box using the positive electrode and negative electrode produced in this way, a solution in which $LiClO_4$ was dissolved at a proportion of 1 mol/liter in a mixed solvent with propylene carbonate and dimethoxyethane mixed at a volume ratio of 1:1 as the electrolyte solution, a polypropylene fine porous membrane as the separator, and a polyethylene gasket.

In a lithium secondary battery having such a configuration, lithium doping and de-doping were performed on the positive electrode made of the carbonaceous material, and the capacity at the time was determined. Lithium doping was performed by repeating an operation of turning on the power for 1 hour at a current density of 0.5 mA/cm$^2$ and then pausing for 2 hours until the equilibrium potential between terminals reached 4 mV. A value calculated by dividing the amount of electricity at this time by the weight of carbonaceous material used was defined as the doping capacity, which was expressed in a unit of Ah/kg.

Next, a current was applied in the opposite direction to de-dope the lithium doped in the carbonaceous material. De-doping was performed by repeating an operation of turning on the power for 1 hour at a current density of 0.5 mA/cm$^2$ and then pausing for 2 hours, and a terminal voltage of 1.5 volts was used as the cutoff voltage. A value calculated by dividing the amount of electricity at this time by the weight of carbonaceous material used was defined as the de-doping capacity, which was expressed in a unit of Ah/kg.

Table 1

| | Molar ratio P/F[1) | Condensation catalyst | | Main heat treatment (°C) | Presence of washing with water | Carbon source of coating treatment |
|---|---|---|---|---|---|---|
| | | Alkali type | Addition amount (mass%) | | | |
| Example 1 | 1/1 | NaOH | 2.27 | 1110 | No | n-Hexane |
| Example 2 | 1/1 | NaOH | 2.27 | 1200 | No | n-Hexane |
| Example 3 | 1/2 | NaOH | 1.83 | 1200 | No | n-Hexane |
| Example 4 | 1/1 | NaOH | 3.80 | 1200 | No | n-Hexane |
| Example 5 | 1/1 | NaOH | 0.76 | 1200 | No | n-Hexane |
| Example 6 | 2/1 | NaOH | 2.59 | 1200 | No | Propane |
| Example 7 | 1/1 | NaOH | 2.27 | 1200 | No | Butane |
| Example 8 | 1/1 | NaOH | 2.27 | 1200 | Yes | n-Hexane |
| Example 9 | 1/1 | $Na_2CO_3$ | 3.79 | 1200 | No | n-Hexane |
| Comparative Example 1 | 1/1 | NaOH | 2.27 | 1200 | No | - |
| Comparative Example 2 | 1/1 | NaOH | 2.27 | 1000 | No | n-Hexane |
| Comparative Example 3 | 1/1 | NaOH | 2.27 | 1600 | No | n-Hexane |

(continued)

| | Molar ratio P/F[1] | Condensation catalyst | | Main heat treatment (°C) | Presence of washing with water | Carbon source of coating treatment |
| --- | --- | --- | --- | --- | --- | --- |
| | | Alkali type | Addition amount (mass%) | | | |
| Comparative Example 4 | 1/1 | KOH | 2.27 | 1200 | No | n-Hexane |
| Comparative Example 5 | 1/1 | $NH_3$ | 1.52 | 1200 | No | n-Hexane |
| Comparative Example 6 | 1/1.2 | HCl | 4.70 | 1200 | No | n-Hexane |
| Comparative Example 7 | Pitch | NaOH[2] | 7.0 | 1200 | No | - |
| Comparative Example 8 | Pitch | NaOH[2] | 7.0 | 1200 | No | n-Hexane |
| Comparative Example 9 | 1/1 | $NH_3$ | 1.52 | 1200 | No | - |

1) In "mole ratio P/F", "P" refers to phenol, and "F" refers to formaldehyde
2) In Comparative Examples 7 and 8, the pulverized product of infusible carbon was impregnated with NaOH.

[Table 2]

| | H/C | $D_{v50}$ (μm) | SSA ($m^2$/g) | DS ($cm^3$/g) | True density (g/$cm^3$) | $d_{002}$ (nm) | Battery performance (Ah/kg) | |
| --- | --- | --- | --- | --- | --- | --- | --- | --- |
| | | | | | | | Doping capacity | De-doping capacity |
| Example 1 | 0.04 | 20 | 1.8 | 36 | 1.43 | 0.39 | 756 | 641 |
| Example 2 | 0.03 | 20 | 2.4 | 48 | 1.42 | 0.39 | 732 | 648 |
| Example 3 | 0.03 | 20 | 2.6 | 52 | 1.42 | 0.40 | 709 | 624 |
| Example 4 | 0.03 | 18 | 2.7 | 49 | 1.41 | 0.39 | 725 | 642 |
| Example 5 | 0.03 | 22 | 2.3 | 51 | 1.43 | 0.39 | 645 | 585 |
| Example 6 | 0.03 | 21 | 1.9 | 40 | 1.42 | 0.39 | 722 | 642 |
| Example 7 | 0.03 | 20 | 2.3 | 46 | 1.42 | 0.39 | 728 | 645 |
| Example 8 | 0.03 | 20 | 2.3 | 46 | 1.42 | 0.39 | 724 | 642 |
| Example 9 | 0.02 | 18 | 2.6 | 47 | 1.43 | 0.39 | 718 | 632 |
| Comparative Example 1 | 0.03 | 20 | 8.3 | 166 | 1.43 | 0.39 | 656 | 564 |
| Comparative Example 2 | 0.05 | 20 | 4.2 | 84 | 1.42 | 0.40 | 694 | 523 |
| Comparative Example 3 | 0.01 | 20 | 0.8 | 16 | 1.45 | 0.37 | 214 | 188 |
| Comparative Example 4 | 0.03 | 20 | 3.2 | 64 | 1.39 | 0.39 | 496 | 386 |
| Comparative Example 5 | 0.03 | 21 | 291 | 6111 | 1.37 | 0.40 | 654 | 493 |

(continued)

|  | H/C | $D_{v50}$ ($\mu$m) | SSA ($m^2$/g) | DS ($cm^3$/g) | True density (g/$cm^3$) | $d_{002}$ (nm) | Battery performance (Ah/kg) | |
|---|---|---|---|---|---|---|---|---|
|  |  |  |  |  |  |  | Doping capacity | De-doping capacity |
| Comparative Example 6 | 0.03 | 18 | 28 | 504 | 1.40 | 0.39 | 583 | 495 |
| Comparative Example 7 | 0.03 | 22 | 5.1 | 112 | 1.49 | 0.38 | 624 | 551 |
| Comparative Example 8 | 0.03 | 22 | 2.3 | 51 | 1.49 | 0.38 | 615 | 554 |
| Comparative Example 9 | 0.03 | 21 | 368 | 7728 | 1.37 | 0.40 | 648 | 461 |

As shown in Table 1 and Table 2, the carbonaceous materials of Examples 1 to 9, which were produced by a production method within the scope of the present invention, were all able to produce a carbonaceous material having a large de-doping capacity without the addition of a sodium compound to the carbon precursor.

In contrast, the carbonaceous materials of Comparative Examples 1 to 9 were produced by a production method outside the scope of the present invention. In Comparative Example 1, the treatment of coating the heat-treated carbon with pyrolytic carbon was not performed. In Comparative Example 2, a main heat treatment temperature was lower than the temperature range according to an embodiment of the present invention. In Comparative Example 3, a main heat treatment temperature was higher than the temperature range according to an embodiment of the present invention. In Comparative Examples 4 to 6 and 9, a catalyst used in the addition condensation step was different from the sodium-based basic catalyst according to an embodiment of the present invention. In Comparative Examples 7 and 8, carbonaceous materials were derived from a pitch, and a material of the carbon precursor was different from the carbonaceous material derived from a phenol resin according to an embodiment of the present invention. As such, the carbonaceous materials of Comparative Examples 1 to 9 had a smaller de-doping capacity compared to the carbonaceous materials of Examples 1 to 9.

Further, the difference between Comparative Example 5 and Comparative Example 9 and the difference between Comparative Example 7 and Comparative Example 8 were only the presence of the coating treatment of pyrolytic carbon. In these comparative examples, the effect of capacity improvement due to the coating treatment was not obtained.

**[INDUSTRIAL APPLICABILITY]**

According to the method of producing a carbonaceous material for a negative electrode of a non-aqueous electrolyte secondary battery according to an embodiment of the present invention, it is possible to produce a carbonaceous material having a large de-doping capacity without the addition of a sodium compound to a carbon precursor. The carbonaceous material produced in this manner is useful as an active material for a negative electrode of a non-aqueous electrolyte secondary battery, such as an all-solid-state battery.

**Claims**

1. A method of producing a carbonaceous material for a negative electrode of a non-aqueous electrolyte secondary battery, the method comprising:

   (1) an addition condensation step of subjecting a raw material mixture composed of phenols containing 50 mass% or greater of phenol and an aldehyde to addition condensation in the presence of a sodium-based basic catalyst at less than 5 mass% relative to the raw material mixture to produce a resol type phenol resin;
   (2) a heat treating step of subjecting the resol type phenol resin to:

      (a) a main heat treatment at a temperature of from 950°C to 1500°C in a non-oxidizing gas atmosphere to produce a heat-treated carbon, or
      (b) a pre-heat treatment at a temperature of from 300°C or higher to lower than 800°C and then a main heat treatment at a temperature of from 950°C to 1500°C in a non-oxidizing gas atmosphere to produce a heat-treated carbon; and

(3) a coating step of coating the heat-treated carbon with pyrolytic carbon to produce a carbonaceous material.

2. The method of producing a carbonaceous material for a negative electrode of a non-aqueous electrolyte secondary battery according to claim 1, wherein, in the (a) or the (b) of the heat treating step, a main heat treatment is performed at a temperature of from 1050°C to 1500°C.

3. The method of producing a carbonaceous material for a negative electrode of a non-aqueous electrolyte secondary battery according to claim 1 or 2, wherein the coating step is a step of coating the heat-treated carbon with pyrolytic carbon generated by gas-phase thermolysis of an aliphatic hydrocarbon at a temperature of from 600°C to 1500°C.

4. The method of producing a carbonaceous material for a negative electrode of a non-aqueous electrolyte secondary battery according to any one of claims 1 to 3, further comprising a step of washing the heat-treated carbon to remove sodium after the heat treating step and prior to the coating step.

5. The method of producing a carbonaceous material for a negative electrode of a non-aqueous electrolyte secondary battery according to any one of claims 1 to 4, wherein the carbonaceous material has a true density measured by a pycnometer method with butanol of from 1.20 $g/cm^3$ to 1.60 $g/cm^3$, a specific surface area determined by a BET method using nitrogen adsorption of 30 $m^2/g$ or less, an average particle size of 50 $\mu$m or less, and an atom ratio of hydrogen atoms to carbon atoms (H/C) determined by elemental analysis of 0.1 or less.

6. A method of producing an electrode of a non-aqueous electrolyte secondary battery, the method comprising: producing a carbonaceous material for a negative electrode of a non-aqueous electrolyte secondary battery by the method of producing a carbonaceous material for a negative electrode of a non-aqueous electrolyte secondary battery according to any one of claims 1 to 5, and producing an electrode of a non-aqueous electrolyte secondary battery using the carbonaceous material for a negative electrode of a non-aqueous electrolyte secondary battery.

7. A method of producing a non-aqueous electrolyte secondary battery, the method comprising:
producing an electrode of a non-aqueous electrolyte secondary battery by the method of producing an electrode of a non-aqueous electrolyte secondary battery according to claim 6, and producing a non-aqueous electrolyte secondary battery using the electrode of a non-aqueous electrolyte secondary battery.

**INTERNATIONAL SEARCH REPORT**

International application No.

PCT/JP2021/007380

| A. CLASSIFICATION OF SUBJECT MATTER |
|---|
| H01M 4/36(2006.01)i; H01M 4/587(2010.01)i; C01B 32/05(2017.01)i<br>FI: C01B32/05; H01M4/587; H01M4/36 C |
| According to International Patent Classification (IPC) or to both national classification and IPC |

| B. FIELDS SEARCHED |
|---|
| Minimum documentation searched (classification system followed by classification symbols)<br>H01M4/36; H01M4/587; C01B32/05 |

| Documentation searched other than minimum documentation to the extent that such documents are included in the fields searched |
|---|
| Published examined utility model applications of Japan 1922–1996<br>Published unexamined utility model applications of Japan 1971–2021<br>Registered utility model specifications of Japan 1996–2021<br>Published registered utility model applications of Japan 1994–2021 |

| Electronic data base consulted during the international search (name of data base and, where practicable, search terms used) |
|---|
|  |

| C. DOCUMENTS CONSIDERED TO BE RELEVANT | | |
|---|---|---|
| Category* | Citation of document, with indication, where appropriate, of the relevant passages | Relevant to claim No. |
| Y | WO 2016/021733 A1 (KUREHA CORPORATION) 11 February 2016 (2016-02-11) paragraph [0026], example 17, table 1 | 1–7 |
| Y | JP 2009-200014 A (SUMITOMO BAKELITE CO., LTD.) 03 September 2009 (2009-09-03) paragraph [0021], example 6 | 1–7 |
| A | JP 2017-084764 A (SUMITOMO BAKELITE CO., LTD.) 18 May 2017 (2017-05-18) claims, examples | 1–7 |
| A | JP 2000-133264 A (MATSUSHITA ELECTRIC INDUSTRIAL CO., LTD.) 12 May 2000 (2000-05-12) claims, example 2 | 1–7 |
| A | JP 11-116217 A (SUMITOMO DUREZ CO., LTD.) 27 April 1999 (1999-04-27) claims, example 4 | 1–7 |

☒ Further documents are listed in the continuation of Box C.    ☒ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>23 April 2021 (23.04.2021) | Date of mailing of the international search report<br>18 May 2021 (18.05.2021) |
|---|---|
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2021/007380

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-223226 A (KUREHA CHEMICAL INDUSTRY CO., LTD.) 21 August 1998 (1998-08-21) claims, example 5 | 1-7 |
| A | JP 09-204918 A (SONY CORP.) 05 August 1997 (1997-08-05) claims, example 1 | 1-7 |
| A | JP 09-204918 A (KUREHA CORPORATION) 22 August 2016 (2016-08-22) claims | 1-7 |
| A | WO 2017/022486 A1 (KURARAY CO., LTD.) 09 February 2017 (2017-02-09) paragraphs [0012]-[0087] | 1-7 |

Form PCT/ISA/210 (continuation of second sheet) (January 2015)

**INTERNATIONAL SEARCH REPORT**

Information on patent family members

International application No.

PCT/JP2021/007380

| Patent Documents referred in the Report | Publication Date | Patent Family | Publication Date |
|---|---|---|---|
| WO 2016/021738 A1 | 11 Feb. 2016 | US 2017/0237071 A1 paragraphs [0060]-[0061], example 17, table 1 EP 3179541 A1 | |
| JP 2009-200014 A | 03 Sep. 2009 | (Family: none) | |
| JP 2017-084764 A | 18 May 2017 | (Family: none) | |
| JP 2000-133264 A | 12 May 2000 | US 6316146 B1 claims, example 2 | |
| JP 11-116217 A | 27 Apr. 1999 | (Family: none) | |
| JP 10-223226 A | 21 Aug. 1998 | US 2002/0039686 A1 claims, example 5 WO 1998/035396 A1 | |
| JP 09-204918 A | 05 Aug. 1997 | (Family: none) | |
| JP 2016-152222 A | 22 Aug. 2016 | (Family: none) | |
| WO 2017/022486 A1 | 09 Feb. 2017 | US 2018/0233749 A1 paragraphs [0032]-[0109] EP 3333945 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S57208079 A
- WO 2016021737 A
- WO 2019235586 A